# EUROPÄISCHE PATENTSCHRIFT

(11) **EP 1 886 772 B1**
(45) Veröffentlichungstag und Bekanntmachung des Hinweises auf die Patenterteilung: **12.11.2008**
(21) Anmeldenummer: 06016021.5
(22) Anmeldetag: 01.08.2006
(51) Int. Cl.: B25J 15/08

(54) **Vorrichtung und Verfahren zum Transportieren und Untergreifen von Gegenständen**
Apparatus and process for transporting objects and gripping them from below
Dispositif et procédé pour le transport d'objets et leur préhension par dessous

(43) Veröffentlichungstag der Anmeldung: 13.02.2008
(73) Patentinhaber: Albert Handtmann Maschinenfabrik GmbH & Co. KG, 88400 Biberach (DE)
(72) Erfinder: Liermann, Torsten, 88471 Laupheim (DE); Wolf, Andreas, 70372 Stuttgart (DE); Mayer, Steffen, 71227 Rutesheim (DE)
(74) Vertreter: Grünecker, Kinkeldey, Stockmair & Schwanhäusser Anwaltssozietät

(56) Entgegenhaltungen:
- WO-A2-99/00306
- DE-U1- 20 203 818
- FR-A1- 2 725 430
- JP-A- 6 219 548

## Beschreibung

Die Erfindung betrifft eine Vorrichtung sowie ein Verfahren zum Transportieren und Abgreifen von Gegenständen, insbesondere Fleisch- und Wurstwaren: Bei der Herstellung von Fleisch- und Wurstwaren werden die Fleisch- und Wurstwaren in der Regel auf Förderbändern transportiert. Der Abgriff der Gegenstände, d.h. hier der Fleisch- und Wurstwaren, erfolgt in der Regel von oben. Grundsätzlich besteht die Möglichkeit, die Gegenstände mit einem Haftgriff, Klemmgriff, Formgriff oder Untergriff aufzunehmen. Die Aufnahme von empfindlichen Fleisch- und Wurstwaren gestaltet sich jedoch schwierig, da die Fleisch- und Wurstwaren durch das Abgreifen geschädigt werden können. Bei Fleisch- und Wurstwaren, die aufgrund ihrer Beschaffenheit, wie beispielsweise Hackfleisch, mit Untergriff aufgenommen werden müssen, geschieht dies häufig durch ein Unterschieben des Greifers von einer Seite unter die Fleisch- und Wurstwaren. Dies führt jedoch oft zu Beschädigungen des Transportguts und zu Positionsungenauigkeiten. Insbesondere können Gegenstände, die unorientiert auf dem Förderband liegen, schlecht aufgenommen werden.

Aus der Druckschrift FR 2725430 ist bereits eine Vorrichtung zum Transportieren und Aufnehmen von Gegenständen bekannt, die zwei Greifergabeln mit Fingem aufweist, wobei die Greifergabeln hintereinander angeordnet sind. Die Vorrichtung weist weiter parallel zueinander angeordnete Transportseile auf, in die die Greifergabeln eingreifen können. Die aufzunehmenden Gegenstände werden auf die Gabel geschoben.

Hiervon ausgehend liegt der vorliegenden Erfindung die Aufgabe zugrunde, eine Vorrichtung und ein Verfahren zum Transportieren und Abgreifen von Gegenständen, insbesondere Fleisch- und Wurstwaren, bereitzustellen, mit denen selbst empfindliche Gegenstände in einfacher Weise positionsgenau, sicher und schnell ohne Beschädigung bei laufendem Förderband abgenommen werden können.

Erfindungsgemäß wird diese Aufgabe durch die Merkmale der Ansprüche 1 und 15 gelöst.

Dadurch, dass die Oberfläche des Förderbandes eine Oberflächenkontur aufweist, die derart ausgebildet ist, dass die Greiferfinger in Zwischenräume der Oberflächenkontur eingreifen können und somit die Gegenstände untergreifen können, können die Gegenstände schonend von unten vom Band abgenommen werden. Dadurch, dass das Greifwerkzeug zwei gegenüberliegende Greifbacken zum Abgreifen der Gegentände von zwei längs- oder Querseiten aufweist, können die Gegenstände positionsgenau aufgenommen werden. Insbesondere bei empfindlichen Fleisch- und Wurstwaren kommt es durch die beidseitig schließenden Greiferbacken zu keinen Beschädigungen. Auch Gegenstände, die sich in einer unorientierten Lage auf dem Transportband befinden, können sicher und schnell abgegriffen werden.

Dabei können die Greifbacken beidseitig schließend sein oder aber eine Greifbacke starr und eine Greifbacke beweglich sein. Wenn eine Greifbacke starr ist, übernimmt ein Antrieb z.B. ein Roboter die Bewegung dieser Greifbacke, die für den Untergriff notwendig ist.

Bei der Variante mit einer beweglichen und einer starren Greifbacke sind nicht nur Ausführungen denkbar, bei der die Greifbacken in Transportrichtung oder senkrecht zur Transportrichtung gegenüberliegen, sondem auch eine Ausführungsform, bei der die bewegliche Greifbacke unter das Werkstück greift, während die feste Greifbacke ähnlich einem Niederhalter starr von oben oder schräg von oben wirkt. Dies hat den Vorteil, dass der Roboter nicht unbedingt die für den Untergriff erforderliche Bewegung ausführen muss, so dass auch hier wieder eine höhere Taktzeit des Roboters erreicht werden kann.

Es ist auch denkbar, dass das Greifwerkzeug mehr als zwei Greifbacken umfasst. Dabei können zusätzlich zu den gegenüberliegenden Greifbacken noch orthogonal zu diesen Greifbacken wirkende Greifbacken vorgesehen sein. Dies ermöglicht ein sicheres Abgreifen der Gegenstände, ohne dass diese seitlich aus dem Greifwerkzeug rutschen können. Diese Greifbacken, die orthogonal zu den Greifbacken wirken, können zwar ebenfalls in die Oberflächenkontur des Förderbandes eingreifen, jedoch können diese auch als Abstützelemente ausgebildet sein und nicht in die Oberflächenkontur des Förderbandes eingreifen.

Es ist vorteilhaft, wenn das Greifwerkzeug einen Antrieb umfasst, mit dem es in Transportrichtung bewegbar ist, wobei während des Abgreifvorgangs vorzugsweise das Greifwerkzeug synchron zum Förderband in Transportrichtung angetrieben wird, zumindest während die Greiferbacken schließen. Die erfindungsgemäße Merkmalskombination, dass die Gegenstände durch zwei vorzugsweise beidseitig schließende Greiferbacken aufgenommen werden, während sich das Greifwerkzeug synchron zum Förderband bewegt bringt mit sich, dass keine Beschleunigungs- oder Bremskräfte beim Abnehmen auf die Fleisch- und Wurstwaren wirken. Dies ist insbesondere bei sehr empfindlichen Fleisch- und Wurstwaren von großer Bedeutung. Dadurch, dass die Geschwindigkeit des Greifwerkzeuges der Geschwindigkeit des Förderbandes in Transportrichtung entspricht, kann die Positionsgenauigkeit beim Abgreifen erheblich verbessert werden. Die Prozessgeschwindigkeit kann somit gesteigert werden.

Vorzugsweise weist die Oberfläche des Förderbandes voneinander beabstandete Auflageelemente auf, wobei die Greiffinger dann in den Zwischenraum zwischen den Auflageelementen eingreifen können. Die Auflageelemente können dabei flexibel gestaltet sein, was ein Eingreifen der Greiffinger auch ermöglicht, wenn diese nicht exakt ausgerichtet sind. Flexible Auflageelemente ermöglichen darüber hinaus auch ein ungerichtetes Eingreifen der Greiffinger in die Oberfläche des Förderbandes.

Damit die Greifbacken beidseitig eingreifen können, sind diese, d.h. zumindest eine, vorzugsweise schwenkbar gelagert, und schwenken zum Aufnehme der Gegenstände aus einer geöffneten Position zueinander in Richtung Förderband, so dass der jeweils mindestens eine Greiferfinger in die Oberfläche des Förderbandes greift. Die Vorrichtung weist vorzugsweise auch einen Mechanismus zum Heben und Senken des Greifwerkzeugs auf.

Die Greiffinger können einen im Wesentlichen L-förmigen oder gekrümmten Abschnitt aufweisen, so dass der aufzunehmende Gegenstand von unten und seitlich von dem Abschnitt gehalten werden kann. Wenn die Greiferbacken auf gegenüberliegenden Seiten einer Halteplatte angeordnet sind, kann der aufzunehmende Gegenstand auch noch nach oben durch diese Halteplatte gestützt werden.

Gemäß der Erfindung kann das Greifwerkzeug in Förderrichtung oder senkrecht oder unter einem beliebigen Winkel in die Oberfläche des Förderbandes eingreifen.

Die vorliegende Erfindung wird nachfolgend unter Bezugnahme der folgenden Figuren näher erläutert.
- Fig. 1: zeigt in perspektivischer Darstellung eine Ausführungsform gemäß der vorliegenden Erfindung,
- Fig. 2: zeigt die in Fig. 1 gezeigte Ausführungsform mit geöffneten Greifbacken,
- Fig. 3a: zeigt schematisch die vorliegenden Erfindung bei der die Greiffinger in Transportrichtung in das Förderband greifen,
- Fig. 3b: zeigt schematisch die vorliegende Erfindung, bei der die Greiferfinger quer zur Transportrichtung eingreifen.
- Figuren 4a - 4d: zeigen mögliche Ausführungsformen der Auflageelemente des Förderbandes.
- Fig. 5: zeigt in perspektivischer Darstellung ein umlaufendes Förderband gemäß der vorliegenden Erfindung.
- Fig. 6: zeigt einen schematischen Aufbau einer Vorrichtung gemäß der vorliegenden Erfindung.
- Fig. 7: zeigt in perspektivischer Darstellung eine Ausführungsform der vorliegenden Erfindung.
- Fig. 8: zeigt schematisch eine weitere Ausführungsform gemäß der vorliegenden Erfindung.

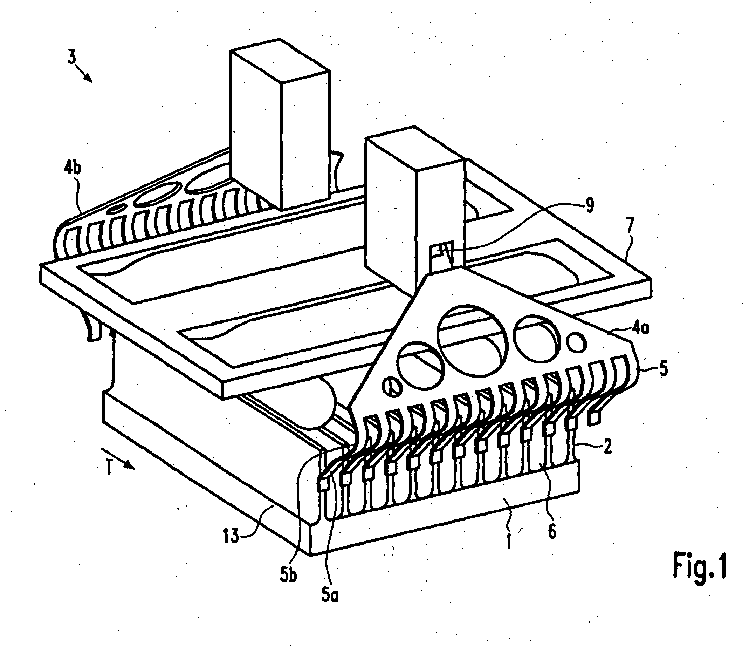

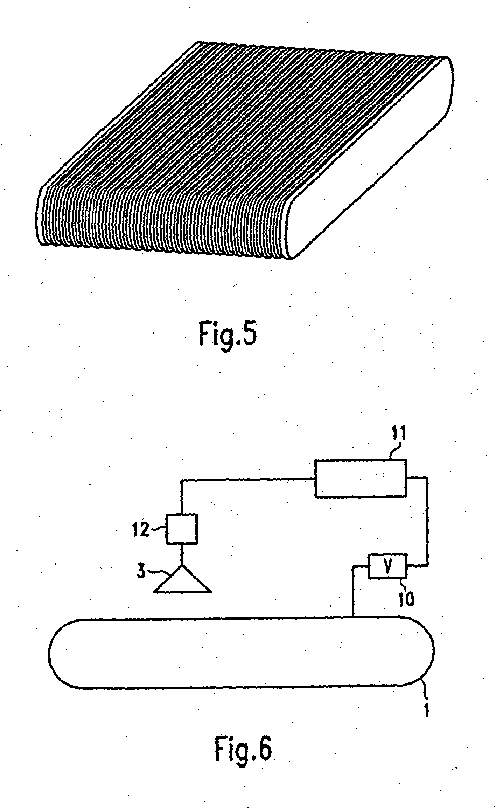

Wie aus Fig. 1 hervorgeht, weist die Vorrichtung zum Transportieren und Abgreifen von Gegenständen ein Förderband 1 auf, das die Gegenstände, hier z.B. die Würste 13, in Transportrichtung T transportiert. Das Förderband 1 ist, wie aus Fig. 5 erkennbar, ein umlaufender einteiliger Gurt, der über einen nicht gezeigten Antrieb in Transportrichtung angetrieben wird. Das Förderband 1 ist hier als Vollgurt ausgebildet. Als Material kommen vorwiegend Kunststoffe mit oder ohne Gewebeeinlage zum Einsatz. Das Trägermaterial kann für den jeweiligen Anwendungsfall entsprechend beschichtet sein. Es ist jedoch auch möglich, einen Gliedergurt zu verwenden, der sich aus einzelnen Segmenten zusammensetzt, die miteinander verwebt oder über Verbindungselemente verbunden sind. Als Material kommen hier hauptsächlich Gurte zum Einsatz, die aus Kunststoff gefertigt sind, aber auch Gurte aus Stahl oder Edelstahl kommen zum Einsatz. Die Gliedergurte können in bestimmten Ausführungen auch als Kurvenbänder ausgeführt werden, die in einem gewissen Radius geführt werden können. Das Förderband kann auch einen Schuppengurt umfassen, der vor allem auch dann eingesetzt wird, wenn das Band Biegungen oder Kurven fahren soll. Auch eignet sich der Schuppengurt für hohe Traglasten.

Wie aus den Figuren 1 und 5 hervorgeht, ist die Oberfläche des Förderbandes derart gestaltet, dass sie eine Oberflächenkontur aufweist, die derart ausgebildet ist, dass Greiffinger 5 eines Greifwerkzeuges 3 in die Zwischenräume 6 der Oberflächenkontur eingreifen können und die Gegenstände, d.h. hier die Würste 13 untergreifen können.

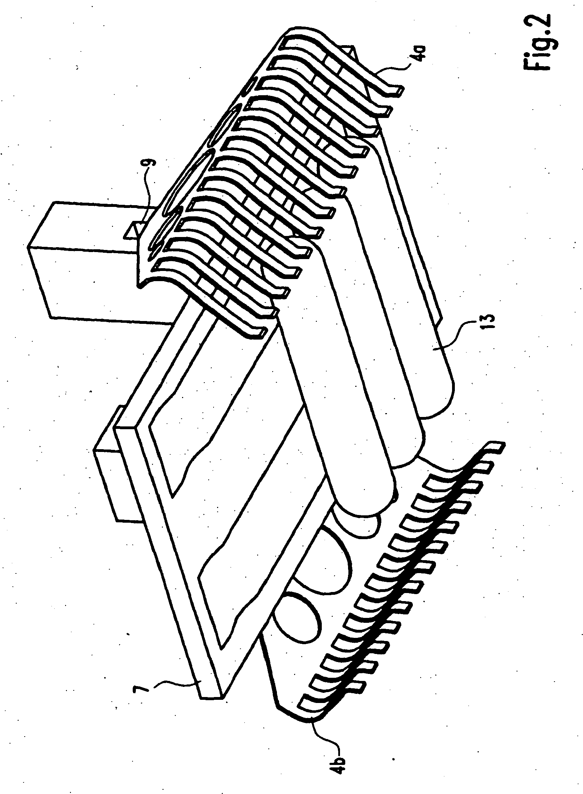

Dazu weist das Förderband hier Auflageelemente 2 auf, die voneinander beabstandet sind, so dass sich zwischen den Auflageelementen 2 die Zwischenräume 6 bilden. In den Figuren 1 und 2 sind die Auflageelemente 2 als sich in Transportrichtung T erstreckende Stege ausgebildet. Die Würste sind hier in Transportrichtung T ausgerichtet, wobei der Abstand zwischen zwei Auflageelementen 2 so klein gewählt ist, dass die Wurst 13 nicht in die Zwischenräume 6 rutscht, jedoch ausreichend Platz für mindestens einen Greiffinger ist, der in den Zwischenraum 6 eingreift.

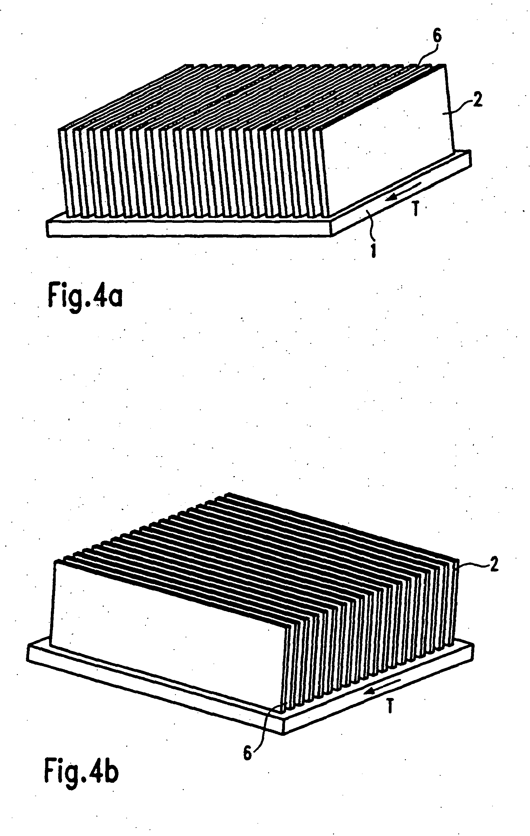

Wie aus den Figuren 4a bis 4d hervorgeht, können die Auflageelemente 2 in unterschiedlicher Weise angeordnet sein.

Fig. 4a zeigt eine Anordnung der Auflageelemente 2 in Transportrichtung T, so dass die Längsrillung der Zwischenräume 6 in Transportrichtung läuft. Die Greiffinger tauchen dann parallel zur Transportrichtung in die Oberflächenkontur des Förderbandes 1 ein.

Es ist jedoch auch möglich, wie in Fig. 4b dargestellt, dass sich die Auflageelemente 2 quer zur Transportrichtung T erstrecken, so dass sich die Längsrichtung quer zur Transportrichtung T erstreckt, so dass die Eintauchrichtung der Greiffinger quer zur Transportrichtung erfolgt.

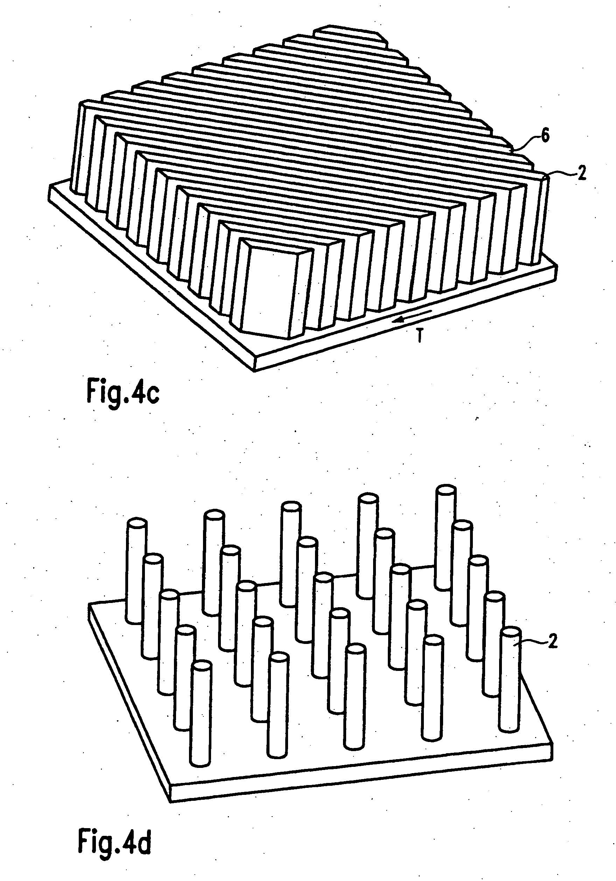

Die Auflageelemente 2 können auch, wie in Fig. 4c dargestellt ist, unter einem bestimmten Winkel zur Transportrichtung T verlaufen derart, dass sich die Rillung unter einem Winkel zur Transportrichtung T erstreckt und die Greiffinger in die Zwischenräume 6 unter diesem bestimmten Winkel zur Transportrichtung T in die Oberfläche des Förderbandes 1 eingreifen.

Wie aus Fig. 4d ersichtlich ist, müssen die Auflageelemente jedoch nicht als Stege ausgebildet sein, sondem können auch sich im Wesentlichen senkrecht zur Förderbandoberfläche erstreckende Auflageelemente 2 umfassen, die sowohl in Transportrichtung T als auch quer zur Transportrichtung T entsprechende Zwischenräume 6 bilden, so dass kein gerichteter Untergriff notwendig ist, sondem ein freier Untergriff, d.h. dass die Orientierung des Greifers zur Transportrichtung frei gewählt werden kann. Vorzugsweise sind dann die Auflageelemente 2 flexibel.

Wie aus Fig. 1 hervorgeht, umfasst die erfindungsgemäße Vorrichtung auch mindestens das Greifwerkzeug 3, das zwei gegenüberliegende Greifbacken 4a, 4b zum Abgreifen der Würste 3 umfasst. Die Greifbacken 4a, 4b liegen sich hier beidseitig schließend gegenüber. Die Greifbacken 4a, 4b umfassen jeweils mindestens einen Greiffinger 5, hier mehrere Greiffinger 5. Die Greifbacken 4a, 4b sind in dem Lager 9 schwenkbar gelagert und können aus einer geöffneten Position zueinander in Richtung Förderband in eine geschlossene Position geschwenkt werden, so dass die Greiffinger 5 jeweils in die Zwischenräume 6 des Förderbandes 1 eintauchen und die Würste untergreifen.

Bei dieser Ausführungsform weisen die Greiffinger einen im Wesentlichen L-förmigen Abschnitt 5a, 5b auf, wobei in einer geschlossenen Position der Greifbacken der Abschnitt 5b unter der Wurst 13 zu liegen kommt und der Abschnitt 5a die aufgenommenen Würste 13 seitlich begrenzt.

Bei dieser Ausführungsform sind die Greifbacken 4a, 4b auf gegenüberliegenden Seiten einer Halteplatte 7 angeordnet, so dass die Würste nach oben durch die Halteplatte 7 gestützt werden. Die Breite der Greifbacken 4a, 4b entspricht in Fig. 1 im Wesentlichen der Förderbandbreite. Die Breite der Greifbacken 4a, 4b kann jedoch auch schmäler oder breiter als die Förderbandbreite sein, da das Förderband für verschiedene Portionsgrößen geeignet sein soll. Das Greifwerkzeug 3 umfasst einen nicht dargestellten Mechanismus zum Heben und Senken des Greifwerkzeuges 3. Außerdem umfasst das Greifwerkzeug 3 wie aus Fig. 6 ersichtlich ist einen Antrieb 12, der das Greifwerkzeug 3 in Transportrichtung bewegt. Als Bewegungsmechanismen für das Greifwerkzeug können Handhabungssysteme, wie beispielsweise Linearachsen oder Roboter eingesetzt werden.

In Fig. 6 ist schematisch der Antrieb 12 dargestellt, der das Greifwerkzeug 3 in Transportrichtung T, entgegen der Transportrichtung T quer zur Transporteinrichtung und auch senkrecht nach oben und unten bewegen kann. Zeitgleiche Bewegungen in verschiedenen Richtungen sind möglich.

Zum Abgreifen der Würste wird das Greifwerkzeug 3 synchron zum Förderband 1 in Transportrichtung T angetrieben.

Dazu kann am Förderband 1 ein Geschwindigkeitsaufnehmer 10 vorgesehen sein, wie beispielsweise ein Resolver oder Inkrementalgeber, über den die Geschwindigkeit des Förderbandes 1 bzw. der sich mit dem Förderband bewegenden Gegenstände 13 ermittelt wird. Das Messergebnis wird einer Steuereinrichtung 11 weitergegeben, die wiederum den Antrieb 12 für das Greifwerkzeug 3 steuert.

Dabei sind vorzugsweise die Geschwindigkeiten des Förderbandes 1 und des Greifwerkzeuges 3 gleich, so dass beim Abgriff die Relativgeschwindigkeit zwischen Greifwerkzeug 3 und Förderband 1 im Wesentlichen 0 ist.

In der Figur 1 wurde die Vorrichtung schematisch mit zwei gegenüberliegenden beidseitig schließenden Greifbacken 4a, b beschrieben. Denkbar ist jedoch auch eine Ausführung, bei der eine Greifbacke starr und nur eine Greifbacke beweglich ist, wobei dann die Bewegung für den Untergriff durch den Antrieb 12, d.h. z.B. durch einen Roboter zu realisieren wäre.

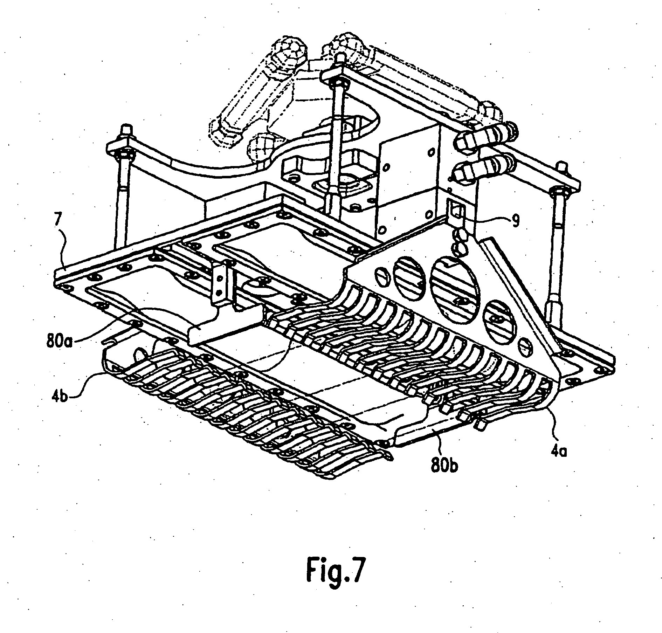

In den Figuren 1 und 2 sind zwei gegenüberliegende Greifbacken 4a, b gezeigt. Das Greifwerkzeug 3 kann jedoch auch mehr als zwei Greifbacken 4a, b umfassen. Dabei können beispielsweise zusätzlich zu den gegenüberliegenden Greifbacken 4a, b noch orthogonal zu diesen Greifbacken wirkende Greifbacken, die hier nicht dargestellt sind, vorgesehen sein. Auch diese Greifbacken können beispielsweise so ausgebildet sein, dass sie in die Oberflächenkontur des Förderbandes 1 eingreifen können. Dazu ist die Oberfläche des Förderbandes vorzugsweise, wie in Figur 4d gezeigt, ausgebildet, so dass ein Eingriff aus mehreren Richtungen möglich ist. Die orthogonal wirkenden Greifbacken 80b können, wie aus Figur 7 ersichtlich ist, auch als Abstützelemente ausgebildet sein, die nicht in die Oberflächenkontur des Förderbandes 1 eingreifen. Diese Abstützelemente 80a, b können die aufgenommenen Portionen seitlich abstützen. Dabei können die Greifbacken 80a, b auch orthogonal beweglich ausgebildet sein, so dass beim Abgreifen der Positionen auch bei diesen Greifbacken zumindest eine der Greifbacken 80a, b auf die andere zubewegt wird, um die abgenommene Portion bzw. die abgenommenen Portionen festzuhalten.

Das erfindungsgemäße Verfahren wird nachfolgend näher erläutert.

Wie aus Fig. 1 und 6 hervorgeht, werden die Würste 13 auf dem Förderband 1 in Transportrichtung T mit einer Transportgeschwindigkeit v₁ > 0 transportiert. An einem vorbestimmten Förderbandabschnitt sollen die Würste 13 vom Band abgegriffen werden. Oberhalb des Transportbandes 1 befindet sich das Greifwerkzeug 3. Hier sind die Würste 13 in Transportrichtung T ausgerichtet und gruppenweise angeordnet. Ist die Lage und die Orientierung der Würste bekannt, so reicht in der Regel eine einfache Triggerung des Antriebs 12, z.B. eines Roboters, aus, da bekannt ist, wann die Würste den Arbeitsraum des Greifwerkzeuges 3 erreichen. Wenn Lage und Orientierung der Würste nicht bekannt sind, so findet eine nicht näher erläuterte Erkennung der Würste in einem Sensorbereich statt. Der Greifer 3 kann dann in eine entsprechende Position verfahren werden. Das Greifwerkzeug 3 wird über einen Antrieb 12 ebenfalls in Transportrichtung T mit dem Förderband 1 bewegt, so dass die Geschwindigkeit v₂ des Greifwerkzeuges 3 im Wesentlichen der Geschwindigkeit v₁ des Förderbandes 1 entspricht. Zum Abgreifen senkt sich das Greifwerkzeug 3 in Richtung Förderband 1 und die beidseitig schließenden Greifbacken 4a, 4b schwenken in eine Richtung zueinander zum Förderband 1 hin, wobei die Greiffinger 5 in die Zwischenräume 6 eingreifen. In einer geschlossenen Position kommt dann ein Teil 5b der Greifbacken 4a, 4b unterhalb der Würste 13 zu liegen, während ein seitlicher Abschnitt der Greifbacken 4a, 4b die Würste 13 seitlich begrenzt. Nach oben werden die Würste durch die Platte 7 begrenzt. Dadurch, dass sich das Greifwerkzeug 3 mit in Transportrichtung T, vorzugsweise mit gleicher Geschwindigkeit, bewegt, wirken auf die Würste 3 keine Brems- oder Beschleunigungskräfte und die Würste können somit schonend aufgenommen werden. In Kombination mit den beidseitig schließenden Greifbacken kommt es somit zu keinem Aufstauen oder Schieben der Würste 13, was insbesondere bei empfindlichen Fleisch- und Wurstwaren wesentlich ist. Dadurch, dass die Würste von zwei Seiten aus gegriffen werden, können sie schnell, exakt und sicher abgenommen werden. Wenn die Greifbacken 4a, 4b in ihrer geschlossenen Position sind, wird das Greifwerkzeug 3 über einen Hubmechanismus vom Band abgehoben und kann dann an einer anderen gewünschten Stelle abgelegt werden.

Dazu wird, wie in Fig. 2 gezeigt, das Greifwerkzeug 3 über der gewünschten Stelle positioniert, wobei sich die Greifbacken 4a, 4b gleichzeitig auseinander nach oben bewegen, so dass die Würste freigesetzt werden und abgelegt werden können. Auch die Ablage der Portionen kann mit an das Ablageband angepasster Geschwindigkeit erfolgen, ähnlich dem bandsynchronen Aufnehmen.

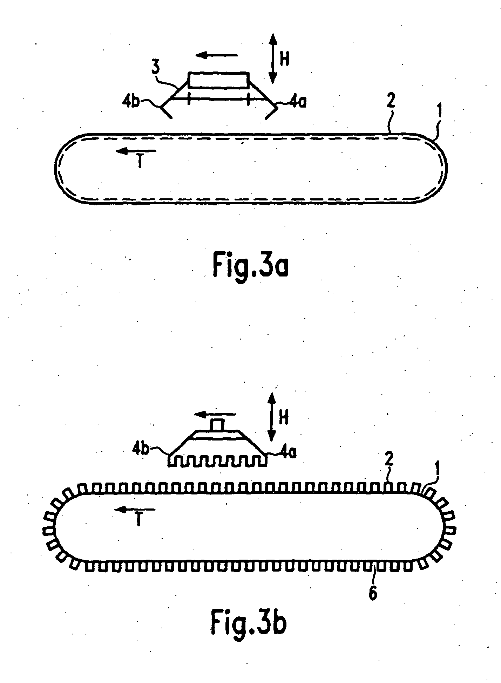

Bei dem gezeigten Beispiel greift das Greifwerkzeug 3, wie auch aus Fig. 3a hervorgeht, in Transportrichtung in die Zwischenräume des Förderbandes 1 ein. Es ist jedoch auch möglich, wie aus Fig. 3b hervorgeht, dass die Greiffinger 5 des Greifwerkzeuges 3 quer oder unter einem vorbestimmten Winkel in die Oberfläche des Förderbandes eingreifen. Dazu ist die Bandoberfläche dann, wie beispielsweise in Figuren 4b, 4c oder 4d gezeigt, gestaltet. Vorzugsweise aber bewegt sich das Greifwerkzeug 3 zum Abgreifen zusammen mit dem Förderband 1 in Transportrichtung. Die Erfindung bringt den Vorteil mit sich, dass zum Abgreifen kein Stillstand des Förderbandes oder der damit transportierten Gegenstände erforderlich ist.

Nachdem das Greifwerkzeug 3 die Fleisch- und Wurstwaren, bzw. die entsprechende Portion, abgenommen hat und, wie in Fig. 2 gezeigt ist, abgelegt hat, wird das Greifwerkzeug 3 erneut in eine Position über das Förderband 1 gebracht und wird zum Abgreifen der Fleisch- und Wurstwaren 13 wieder mit gleicher Geschwindigkeit, wie das Förderband 1, in Transportrichtung T bewegt.

Das zuvor beschriebene Verfahren wurde für zwei beidseitig schließende Greifbacken 4a, b beschrieben. Wie jedoch bereits zuvor erläutert, kann auch eine Greifbacke starr ausgebildet sein, wobei sich dann die gegenüberliegende Greifbacke zum Schließen zur starren Greifbacke hin bewegt. Die Bewegung für den Untergriff erfolgt dann durch den Antrieb 12, d.h. beispielsweise durch den Roboter. Wenn, wie zuvor beschrieben, noch weitere orthogonal zu den Greifbacken 4a, b wirkende Greifbacken 80a, b (Figur 7) vorgesehen sind, können auch diese sich beim Abgreifen aufeinander zubewegen, um die Portion noch besser zu halten. Dabei bewegt sich mindestens eine der beweglichen Greifbacken bzw. Abstützelemente 80a, b. Die Greifbacken 80a, b können beim Ablegen der Portionen bzw. der Würste ebenso wie die Greifbacken für a, b auseinander bewegt werden.

Es können auch mehrere Greifwerkzeuge parallel oder hintereinander angeordnet sein.

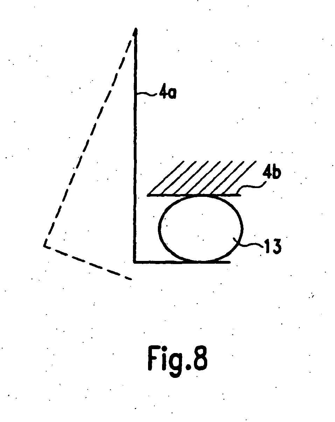

Figur 8 zeigt eine weitere Ausführungsform der vorliegenden Erfindung. Bei der Variante mit einer beweglichen und einer starren Greifbacke 4a, 4b ist nicht nur die beschriebene Ausführung denkbar, bei der sich die Greifbacken 4a, 4b in Transportrichtung oder senkrecht zur Transportrichtung gegenüber stehen, sondem auch eine Ausführungsform, bei der die bewegliche Greifbacke 4a unter das Werkstück greift, während die feste Greifbacke 46 ähnlich einem Niederhalter starr von oben oder schräg von oben wirkt. Dies hat den Vorteil, dass der Roboter nicht unbedingt die für den Untergriff erforderliche Bewegung ausführen muss, so dass auch hier wieder eine höhere Taktzeit des Roboters erreicht werden kann.

Wesentlich bei der Erfindung ist, dass zum positionsgenauen, schonenden Abgreifen das Greifwerkzeug gegenüberliegende schließende Greifbacken 4a, 4b umfasst, die sich vorzugsweise in Transportrichtung bandsynchron bewegen, wobei die Greifbacken gleichzeitig schließen können oder aber eine Greifbacke starr ausgebildet ist und die gegenüberliegende beweglich ist.

## Patentansprüche

1. Vorrichtung zum Transportieren und Abgreifen von Gegenständen, insbesondere Fleisch- und Wurstwaren (13) mit
einem Förderband (1), das die Gegenstände in Transportrichtung (T) transportiert,
mindestens einem Greifwerkzeug (3) mit seitlich gegenüberliegenden Greifbacken (4a, 4b) zum Abgreifen der Gegenstände von zwei Seiten, wobei mindestens eine der Greifbacken (4a, 4b) jeweils mindestens einen Greiffinger (5) aufweist und
die Oberfläche des Förderbandes (1) eine Oberflächenkontur aufweist die derart ausgebildet ist, dass die Greiffinger (5) in Zwischenräume (6) der Oberflächenkontur eingreifen und die Gegenstände (13) untergreifen können.

2. Vorrichtung nach mindestens einem der Ansprüche,
**dadurch gekennzeichnet, dass**
die Greifbacken (4a, b) beidseitig schließend sind oder eine Greifbacke starr und eine Greifbacke beweglich ist.

3. Vorrichtung nach Anspruch 1 oder 2,
**dadurch gekennzeichnet, dass**
das Greifwerkzeug (3) einen Antrieb (12) umfasst, mit dem es in Transportrichtung (T) bewegbar ist.

4. Vorrichtung nach Anspruch 3,
**dadurch gekennzeichnet, dass**
das Greifwerkzeug (3) während des Abgreifvorgangs synchron zum Förderband (1) in Transportrichtung angetrieben wird.

5. Vorrichtung nach mindestens einem der Ansprüche 1 bis 4,
**dadurch gekennzeichnet, dass**
die Oberfläche des Förderbandes (1) voneinander beabstandete Auflageelemente (2) aufweist.

6. Vorrichtung nach Anspruch 5,
**dadurch gekennzeichnet, dass**
die Auflageelemente (2) flexibel sind.

7. Vorrichtung nach mindestens einem der Ansprüche 1-5,
**dadurch gekennzeichnet, dass**
mindestens eine Greifbacke (4a, 4b) schwenkbar gelagert ist und zum Aufnehmen der Gegenstände aus einer geöffneten Position zur gegenüberliegenden Greifbacke und in Richtung Förderband (1) geschwenkt wird, so dass der jeweils mindestens eine Greiffinger (5) in die Zwischenräume (6) der Oberflächenkontur unter den Gegenstand (13) greift.

8. Vorrichtung nach mindestens einem der Ansprüche 1 bis 7,
**dadurch gekennzeichnet, dass**
das Greifwerkzeug (3) mehr als zwei Greifbacken umfasst.

9. Vorrichtung nach Anspruch 8,
**dadurch gekennzeichnet, dass**
das Greifwerkzeug zusätzlich zu den gegenübefliegenden Greifbacken (4a, b) noch orthogonal zu diesen Greifbacken wirkende Greifbacken (80a, b) umfasst.

10. Vorrichtung nach Anspruch 9,
**dadurch gekennzeichnet, dass**
die orthogonal wirkenden Greifbacken (80a, b) als Abstützelement ausgebildet sind, und nicht in die Oberflächenkontur des Förderbandes (1) eingreifen.

11. Vorrichtung nach mindestens einem der Ansprüche 1 bis 10,
**dadurch gekennzeichnet, dass**
die-Vorrichtung einen Mechanismus zum Heben und Senken des Greifwerkzeuges (3) umfasst.

12. Vorrichtung nach mindestens einem der Ansprüche 1 bis 11,
**dadurch gekennzeichnet, dass**
die Greiffinger (5) einen im Wesentlichen L-förmigen oder gekrümmten Abschnitt aufweisen, so dass der aufzunehmende Gegenstand (13) von unten und seitlich von dem Abschnitt gehalten wird.

13. Vorrichtung nach mindestens einem der Ansprüche 1 bis 12,
**dadurch gekennzeichnet, dass**
die Greifbacken (4a,4b) auf gegenüberliegenden Seiten einer Halteplatte (7) angeordnet sind, wobei der aufzunehmende Gegenstand nach oben durch die Halteplatte (7) gestützt wird.

14. Vorrichtung nach mindestens einem der Ansprüche 1 bis 13,
**dadurch gekennzeichnet, dass**
das Greifwerkzeug (3) in Förderrichtung (T) in die Oberfläche des Förderbandes (1) oder senkrecht oder unter einem beliebigen Winkel in die Oberfläche des Förderbandes (1) eingreift.

15. Verfahren zum Transportieren und Abgreifen von Gegenständen (13), insbesondere Fleisch und Wurstwaren, wobei
die Gegenstände (13) auf einem Förderband (1) in Transportrichtung (T) transportiert werden und von mindestens einem Greifwerkzeug (3) mit seit Q·ch gegenüberliegenden Greifbacken (4a, 4b) abgegriffen werden, wobei mindestens ein Greiffinger von mindestens einer der Greifbacken (4a, 4b) in Zwischenräume der Oberflächenkontur des Förderbands (1) eingreift und die Gegenstände untergreift, wobei
die Gegenstände von zwei Seiten gegriffen werden.

16. Verfahren nach Anspruch 15,
**dadurch gekennzeichnet, dass**
das Greifwerkzeug (3) in Transportrichtung (T) während des Abgreifens bewegt wird.

17. Verfahren nach Anspruch 16,
**dadurch gekennzeichnet, dass**
das Greifwerkzeug synchron zum Förderband in Transportrichtung (T) angetrieben wird.

18. Verfahren nach mindestens einem der Ansprüche 15 bis 17,
**dadurch gekennzeichnet, dass**
das Greifwerkzeug in Förderrichtung (T) oder senkrecht oder unter einen beliebigen Winkel in die Oberfläche des Förderbands (1) eingreift.

19. Verfahren nach mindestens einem der Ansprüche 1 bis 18,
**dadurch gekennzeichnet, dass**
zum Aufnehmen der Gegenstände die Greifbacken beidseitig schließen oder eine Greifbacke starr bleibt und die gegenüberliegende Greifbacke schließt.

20. Vorrichtung nach mindestens einem der Ansprüche 1 bis 14,
**dadurch gekennzeichnet, dass**
beide Greifbacken (4a, 4b) mindestens einen Greiffinger (5) aufweisen.

21. Verfahren nach mindestens einem der Ansprüche 15 bis 19,
**dadurch gekennzeichnet, dass**
die Greiffnger (5) der Greifbacken von zwei Seiten den Gegenstand abgreifen.

## Claims

1. Device for transporting and gripping objects, in particular meat and sausage products (13), having:
a conveyor belt (1) that transports the objects in the transport direction (T),
at least one gripping tool (3) with laterally opposed gripping jaws (4a, 4b) for gripping the objects from two sides, wherein at least one of the gripping jaws (4a, 4b) each comprises at least one gripping finger (5), and
the surface of the conveyor belt (1) has a surface contour constructed in such a way that the gripping finger (5) can enter into interstitial gaps (6) in the surface contour and engage underneath the objects (13).

2. Device according to at least one of the claims, **characterised in that** the gripping jaws (4a, b) close on both sides or one gripping jaw is fixed and one gripping jaw is movable.

3. Device according to claim 1 or 2, **characterised in that** the gripping tool (3) comprises a drive (12) by means of which it is movable in the transport direction (T).

4. Device according to claim 3, **characterised in that** the gripping tool (3) is driven during the gripping operation synchronously with the conveyor belt (1) in the transport direction.

5. Device according to at least one of claims 1 to 4, **characterised in that** the surface of the conveyor belt (1) comprises support elements (2) spaced apart from one another.

6. Device according to claim 5, **characterised in that** the support elements (2) are flexible.

7. Device according to at least one of claims 1-5, **characterised in that** at least one gripping jaw (4a, 4b) is mounted pivotably and for picking up the objects is pivoted from an open position with respect to the opposing gripping jaw and in the direction of the conveyor belt (1) so that the at least single gripping finger (5) in question engages in the interstices (6) of the surface structure below the object (13).

8. Device according to at least one of claims 1 to 7, **characterised in that** the gripping tool (3) comprises more than two gripping jaws.

9. Device according to claim 8, **characterised in that** in addition to the opposed gripping jaws (4a, b) the gripping tool comprises other gripping jaws (80a, b) acting orthogonally to said gripping jaws.

10. Device according to claim 9, **characterised in that** the orthogonally acting gripping jaws (80a, b) are constructed as a support element and do not engage in the surface contour of the conveyor belt (1).

11. Device according to at least one of claims 1 to 10, **characterised in that** the device comprises a mechanism for raising and lowering the gripping tool (3).

12. Device according to at least one of claims 1 to 11, **characterised in that** the gripping fingers (5) possess a substantially L-shaped or curved section so that the object (13) to be picked up is held by the section from below and laterally.

13. Device according to at least one of claims 1 to 12, **characterised in that** the gripping jaws (4a, 4b) are arranged on opposite sides of a retaining plate (7), wherein the object to be picked up is supported upwardly by the retaining plate (7).

14. Device according to at least one of claims 1 to 13, **characterised in that** the gripping tool (3) engages in the transport direction (T) into the surface of the conveyor belt (1) or perpendicularly or at any desired angle into the surface of the conveyor belt (1).

15. Method for transporting and gripping objects (13), in particular meat and sausage products, wherein the objects (13) are transported on a conveyor belt (1) in the transport direction (T) and are gripped by at least one gripping tool (3) having laterally opposed gripping jaws (4a, 4b), wherein at least one gripping finger of at least one of the gripping jaws (4a, 4b) enters into interstitial gaps in the surface contour of the conveyor belt (1) and engages underneath the objects, wherein the objects are gripped from two sides.

16. Method according to claim 15, **characterised in that** the gripper tool (3) is moved in the transport direction (T) during gripping.

17. Method according to claim 16, **characterised in that** the gripping tool is driven synchronously with the conveyor belt in the transport direction (T).

18. Method according to at least one of claims 15 to 17, **characterised in that** the gripping tool engages in the transport direction (T) or perpendicularly or at any desired angle into the surface of the conveyor belt (1).

19. Method according to at least one of claims 1 to 18, **characterised in that** for picking up the objects the gripping jaws close on both sides or one gripping jaw remains fixed and the opposite gripping jaw closes.

20. Device according to at least one of claims 1 to 14, **characterised in that** both gripping jaws (4a, 4b) possess at least one gripping finger (5).

21. Method according to at least one of claims 15 to 19, **characterised in that** the gripping fingers (5) of the gripping jaws grip the object from two sides.

## Revendications

1. Dispositif pour le transport et la saisie d'objets, en particulier de produits de boucherie et de charcuterie (13), comprenant :
une bande transporteuse (1), qui transporte les objets dans la direction de transport (T),
au moins un outil de préhension (3) avec des mâchoires de préhension (4a, 4b) en vis-à-vis latéral pour la saisie des objets de deux côtés au moins l'une des mâchoires de préhension (4a, 4b) présentant respectivement au moins un doigt de préhension (5), et
la surface de la bande transporteuse (1) présentant un contour superficiel configuré de telle sorte que les doigts de préhension (5) peuvent s'engager dans des espaces intermédiaires (6) du contour superficiel et enserrer par le bas les objets (13).

2. Dispositif suivant l'une au moins des revendications, **caractérisé en ce que** les mâchoires de préhension (4a, 4b) sont à fermeture bilatérale ou une mâchoire de préhension est rigide et une mâchoire de préhension est mobile.

3. Dispositif suivant l'une des revendications 1 et 2, **caractérisé en ce que** l'outil de préhension (3) comprend un entraînement (12), qui permet de le déplacer dans la direction de transport (T).

4. Dispositif suivant la revendication 3, **caractérisé en ce que** l'outil de préhension (3) est entraîné en synchronisme avec la bande transporteuse (1) dans la direction de transport pendant l'opération de saisie.

5. Dispositif suivant l'une au moins des revendications 1 à 4, **caractérisé en ce que** la surface de la bande transporteuse (1) présente des éléments d'appui (2) disposés à distance les uns des autres.

6. Dispositif suivant la revendication 5, **caractérisé en ce que** les éléments d'appui (2) sont flexibles.

7. Dispositif suivant l'une au moins des revendications 1 - 5, **caractérisé en ce qu'**au moins une mâchoire de préhension (4a, 4b) est montée pivotante et pivote pour recevoir les objets d'une position d'ouverture par rapport à la mâchoire de préhension en vis-à-vis et en direction de la bande transporteuse (1), de sorte que le au moins un doigt de préhension respectif (5) s'engage au-dessous de l'objet (13) dans les espaces intermédiaires (6) du contour superficiel.

8. Dispositif suivant l'une au moins des revendications 1 à 7, **caractérisé en ce que** l'outil de préhension (3) comprend plus de deux mâchoires de préhension.

9. Dispositif suivant la revendication 8, **caractérisé en ce que** l'outil de préhension comprend en supplément des mâchoires de préhension (4a, b) en vis-à-vis des mâchoires de préhension (80a, b), qui agissent perpendiculairement à ces mâchoires de préhension.

10. Dispositif suivant la revendication 9, **caractérisé en ce que** les mâchoires de préhension (80a, b), qui agissent perpendiculairement, sont configurées sous forme d'élément de soutien et ne s'engagent pas dans le contour superficiel de la bande transporteuse (1).

11. Dispositif suivant l'une au moins des revendications 1 à 10, **caractérisé en ce que** le dispositif comprend un mécanisme de levage et d'abaissement de l'outil de préhension (3).

12. Dispositif suivant l'une au moins des revendications 1 à 11, **caractérisé en ce que** les doigts de préhension. (5) présentent une section essentiellement en L ou cintrée, de sorte que l'objet à recevoir (13) est maintenu du dessous et latéralement par la section.

13. Dispositif suivant l'une au moins des revendications 1 à 12, **caractérisé en ce que** les mâchoires de préhension (4a, 4b) sont disposées sur des côtés opposés d'une plaque de retenue (7), l'objet à recevoir étant supporté vers le haut par la plaque de retenue (7).

14. Dispositif suivant l'une au moins des revendications 1 à 13, **caractérisé en ce que** l'outil de préhension (3) s'engage dans la direction de transport (T) dans la surface de la bande transporteuse (1) ou perpendiculairement ou sous un angle quelconque dans la surface de la bande transporteuse (1).

15. Procédé de transport et de saisie d'objets (13), en particulier de produits de boucherie et de charcuterie, dans lequel
les objets (13) sont transportés sur une bande transporteuse (1) dans la direction de transport (T) et sont saisis par au moins un outil de préhension (3) avec des mâchoires de préhension (4a, 4b) en vis-à-vis latéral, au moins un doigt de préhension d'au moins l'une des mâchoires de préhension (4a, 4b) s'engageant dans des espaces intermédiaires du contour superficiel de la bande transporteuse (1) et enserrant par le bas les objets,
les objets étant alors saisis de deux côtés.

16. Procédé suivant la revendication 15, **caractérisé en ce que** l'outil de préhension (3) est déplacé dans la direction de transport (T) pendant la saisie.

17. Procédé suivant la revendication 16, **caractérisé en ce que** l'outil de préhension est entraîné en synchronisme avec la bande transporteuse dans la direction de transport (T).

18. Procédé suivant l'une au moins des revendications 15 à 17, **caractérisé en ce que** l'outil de préhension s'engage dans la direction de transport (T) ou perpendiculairement ou sous un angle quelconque dans la surface de la bande transporteuse (1).

19. Procédé suivant l'une au moins des revendications 1 à 18, **caractérisé en ce que,** pour recevoir les objets, les mâchoires de préhension ferment bilatéralement ou une mâchoire de préhension reste rigide et la mâchoire en vis-à-vis ferme.

20. Dispositif suivant l'une au moins des revendications 1 à 14, **caractérisé en ce que** les deux mâchoires de préhension (4a, 4b) présentent au moins un doigt de préhension (5).

21. Procédé suivant l'une au moins des revendications 15 à 19, **caractérisé en ce que** les doigts de préhension (5) des mâchoires de préhension saisissent l'objet de deux côtés.
